# DEMANDE DE BREVET EUROPEEN

(11) **EP 1 091 137 A1**
(43) Date de publication de la demande: **11.04.2001**
(21) Numéro de dépôt: 00402733.0
(22) Date de dépôt: 05.10.2000
(51) Int. Cl.: F16D 65/12, F16D 65/84

(54) **Dispositif de fixation axiale d'un disque ventilé de freinage sur le moyeu d'une roue de véhicule automobile**

(30) Priorité: 08.10.1999 FR 9912561
(71) Demandeur: Messier-Bugatti, 78140 Velizy Villacoublay (FR)
(72) Inventeur: Dabertrand, Pierre G., 01390 Saint-Marcel (FR); Clement, Didier P.A., 69003 Lyon (FR)
(74) Mandataire: Joly, Jean-Jacques

(57) **Abrégé**

Dispositif de fixation axiale d'un disque annulaire de freinage (1) sur un moyeu de roue (10) d'un véhicule automobile, ce disque annulaire de freinage ayant un même axe de rotation (3) que le moyeu et comportant des conduits radiaux de ventilation (16) régulièrement répartis à sa périphérie. Selon l'invention, le moyeu comporte des reliefs axiaux de guidage ou crans (11) destinés à coopérer avec des cannelures (23) d'un bord périphérique intérieur (5) du disque pour centrer le disque, le bloquer angulairement et le guider axialement par rapport au moyeu, chaque cran du moyeu comportant un canal traversant radial (17) destiné à coopérer avec un conduit de ventilation (16) correspondant du disque et le maintien axial du disque dans le moyeu est effectué avec jeu par des moyens (15) de maintien axial disposés entre le disque et le moyeu.

## Description

### Domaine de la technique

L'invention concerne un dispositif de fixation axiale d'un bord périphérique intérieur d'un disque annulaire de freinage sur le bord périphérique extérieur d'un moyeu de roue de véhicule automobile, ces deux bords périphériques se faisant face et coopérant entre eux au moyen de reliefs axiaux de guidage.

### Art antérieur

On sait que dans un véhicule automobile, le disque de frein est monté sur le moyeu de la roue, ou, plus généralement, sur une pièce métallique intermédiaire en forme de cloche appelé "bol" elle-même fixée sur le moyeu. Pour plus de facilité, on ne parlera dans la suite de la description que de moyeu.

Pour la liaison du disque sur le moyeu, on utilise ou bien le montage fixe ou bien le montage flottant.

Dans le montage fixe, le disque ne peut pas se déplacer axialement sous la poussée des plaquettes par les pistons hydrauliques. Le montage fixe présente de nombreux inconvénients, dont le voilage du disque due aux dilatations différentielles entre le disque et le moyeu. Ce voilage repousse les plaquettes et oblige le pilote du véhicule automobile à « pomper » sur la pédale de frein pour les ramener au contact du disque.

Dans le montage flottant, couramment utilisé avec les disques réalisés en matériaux composites, le disque peut se déplacer axialement de quelques dixièmes de millimètres évitant ainsi, en particulier, les risques de voilage.

Ces deux types de montage présentent toutefois de nombreux défauts qui en limite l'utilisation potentielle. Il s'agit essentiellement du nombre important de pièces nécessaire pour passer le couple de freinage, d'où une masse et un coût élevés, il s'agit aussi des problèmes liés au montage et démontage du disque de frein et à l'encombrement latéral important de ces deux types de montage antérieurs.

### Objet et définition de l'invention

Aussi, la présente invention se propose de remédier à ces inconvénients avec un dispositif de fixation axiale qui assure un maintien du disque en direction axiale avec un jeu parfaitement contrôlé. Un but de l'invention est aussi de proposer un dispositif qui puisse être mis en oeuvre avec des disques de freinage ventilé afin de permettre des utilisations à grande vitesse. Un autre but de l'invention est de réaliser un dispositif au montage simple et présentant un faible poids.

Ces buts sont atteints par un dispositif de fixation axiale d'un disque annulaire de freinage sur un moyeu de roue d'un véhicule automobile, ce disque annulaire de freinage ayant un même axe de rotation que le moyeu et comportant des conduits radiaux de ventilation régulièrement répartis à sa périphérie, caractérisé en ce que ledit moyeu comporte des reliefs axiaux de guidage ou crans destinés à coopérer avec des cannelures d'un bord périphérique intérieur du disque pour centrer le disque, le bloquer angulairement et le guider axialement par rapport au moyeu, chaque cran du moyeu comportant un canal traversant radial destiné à coopérer avec un conduit de ventilation correspondant du disque et en ce que le maintien axial du disque dans le moyeu est effectué avec jeu par des moyens de maintien axial disposés entre le disque et le moyeu.

Selon un premier mode de réalisation, les moyens de maintien axial comportent une pluralité de pions radiaux, chaque pion étant enfiché d'une part dans un canal traversant radial d'un cran du moyeu et d'autre part dans le conduit de ventilation radial lui faisant face du disque de freinage. Avantageusement, le canal traversant radial du cran présente un diamètre légèrement plus important que celui du pion afin d'assurer un léger jeu axial de 0.2 à 0.4 mm. De préférence, ce dispositif de maintien axial comporte au moins un pion percé radialement de part en part pour ne pas entraver la ventilation interne du disque. Il comporte en outre un moyen de blocage pour maintenir le pion en position lors de la rotation de la roue et ainsi éviter son déplacement radial. Ce moyen de blocage peut comporter une plaquette d'arrêt fixée sur une face distale du cran et destinée à coopérer avec une gorge du pion.

Selon un second mode de réalisation, le moyen de maintien axial comporte au moins une patte fixée sur une face distale d'un cran du moyeu et destinée à coopérer avec une fente, perpendiculaire à l'axe commun, et pratiquée dans chacun des deux reliefs adjacents du bord périphérique intérieur du disque. Le cran du moyeu comporte en outre une gorge, perpendiculaire à l'axe commun, et pratiquée dans le prolongement de la fente pour recevoir la patte. Avantageusement, la gorge présente une largeur légèrement plus importante que celle de la fente afin d'assurer un léger jeu axial de 0.2 à 0.4 mm.

Le disque de freinage est réalisé en un matériau composite en carbone/carbone.

### Brève description des dessins

L'invention sera mieux comprise à la lecture de la description suivante d'un mode particulier de réalisation. Il sera fait référence aux dessins annexés sur lesquels :
- la figure 1 est une vue en perspective en partie éclatée d'un disque de frein ventilé monté sur un moyeu de roue conformément à un premier aspect l'invention,
- la figure 2 est une vue en coupe transversale de l'ensemble de freinage de la figure 1,
- la figure 3 est une vue en perspective en partie éclatée d'un disque de frein monté sur un moyeu de roue conformément à un second aspect de l'invention, et
- la figure 4 est une vue en coupe transversale de l'ensemble de freinage de la figure 3.

### Description d'un mode de réalisation préférentiel

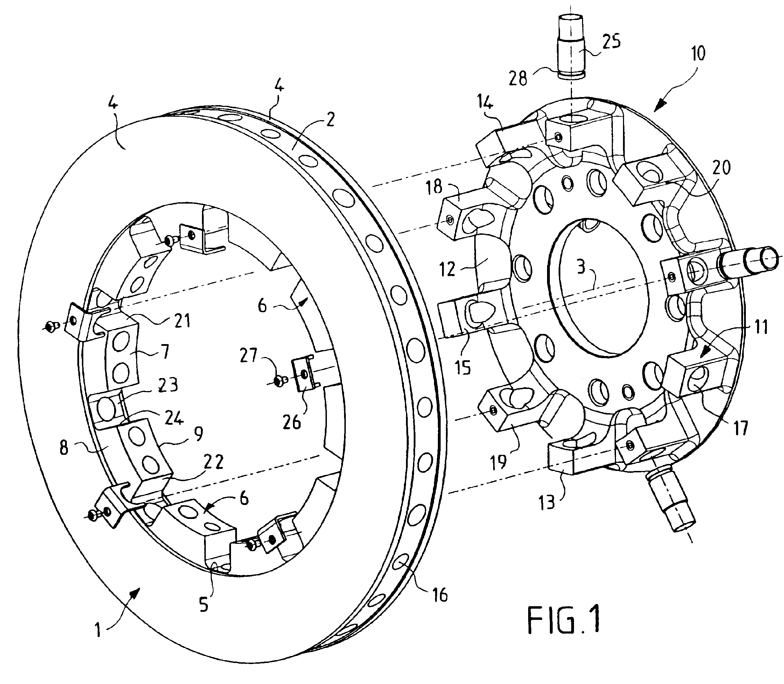

Sur la figure 1 est illustré en perpective un disque ventilé de freinage 1 formé d'un corps central 2, de forme annulaire et d'axe de rotation 3, sur les deux faces opposées duquel sont montées des garnitures de frein 4. Ce disque annulaire de freinage comporte, faisant saillie d'un bord périphérique intérieur 5 en direction radiale, une pluralité de reliefs de guidage espacés 6, sensiblement parallélépipèdiques, avec chacun une face proximale en contact avec ce bord périphérique intérieur 5, une face distale opposée 7 et des faces périphériques externes 8 et 9 dans le prolongement respectif des deux faces externes du corps 2 portant les garnitures 4. Ce disque annulaire de freinage 1 est monté sur un moyeu de roue ou bol 10, représenté pour simplifier sous la forme d'un disque annulaire d'axe 3 commun avec ce disque de freinage 1 et à la périphérie duquel font saillie en direction axiale une pluralité de reliefs de guidage espacés, ou crans 11, sensiblement parallélépipèdiques, avec chacun une face proximale en contact avec une face interne 12 du disque, une face distale opposée 13 et des faces périphériques extérieure 14 et intérieure 15 dirigées respectivement vers l'extérieur et l'intérieur du disque. L'ensemble des faces périphériques extérieures et intérieures des crans 11 définissent respectivement un bord périphérique extérieur et un bord périphérique intérieur, de forme généralement cylindrique, pour le moyeu de roue 10.

Dans les applications automobiles, notamment de tourisme haut de gamme et de compétition, le disque annulaire de freinage est réalisé généralement entièrement (corps et garnitures) dans un matériau composite à hautes caractéristiques thermiques et mécaniques, tel qu'un composite carbone/carbone (C/C) et il comporte une pluralité de conduits radiaux de ventilation 16 ouverts à leur deux extrémités et destiné à son refroidissement par l'air ambiant. Ces conduits de ventilation percés radialement dans le corps 2 du disque annulaire sont répartis régulièrement le long de sa circonférence et débouchent d'une part à sa périphérie externe et d'autre part dans un espace annulaire séparant son bord périphérique intérieur 5 de l'axe de la roue ou fusée (non représentée) portant le moyeu 10. De même, chaque cran 11 du moyeu comporte un canal radial 17 ouvert à chaque extrémité et destiné également à participer au refroidissement du disque lorsque le disque est monté sur son moyeu.

Chaque cran 11 du moyeu comporte deux flancs 18, 19 parallèles et symétriques par rapport à un plan médian passant par l'axe 3 et réunis à la face périphérique extérieure 14 par deux courbures ou un biseaux 20 pour éviter un cisaillement du cran et augmenter la surface de contact lors de son écrasement en cours de freinage. Ces crans 11 coopèrent, pour le blocage angulaire et le centrage du disque de freinage 1 par rapport au moyeu 10, avec les reliefs de guidage 6 correspondants du bord périphérique intérieur 5 de ce disque. Ces reliefs 6 qui sont également traversés par les conduits radiaux 16 ont leurs flancs 21, 22 respectivement parallèles aux flancs 18. 19 du moyeu qui leur sont contigus. De cette façon est permise la libre dilatation radiale, sans coincement, du disque 1 et du moyeu 10, l'un par rapport à l'autre, les reliefs 6 étant séparés par des cannelures 23, plus profondes que la hauteur d'enfoncement des crans 11, afin de compenser la dilatation différentielle du disque et du moyeu, et dans chacune desquelles débouche un des conduits radiaux 16. Le fond de ces cannelures est également arrondi selon une courbure de grand rayon 24 pour réduire les concentrations de contraintes.

Il est prévu en outre un jeu entre les flancs 18, 19 du moyeu et les flancs 21, 22 du disque suffisant pour assurer un montage aisé du disque sur le moyeu, mais toutefois pas trop important pour ne pas risquer un matage. En position de montage, les conduits radiaux 16 du disque débouchant dans les cannelures 23 correspondent exactement avec les canaux traversants radiaux 17 des crans du moyeu. Avantageusement, les crans 11 et les reliefs de guidages 6 associés sont au nombre de dix, sans toutefois que ce nombre soit limitatif.

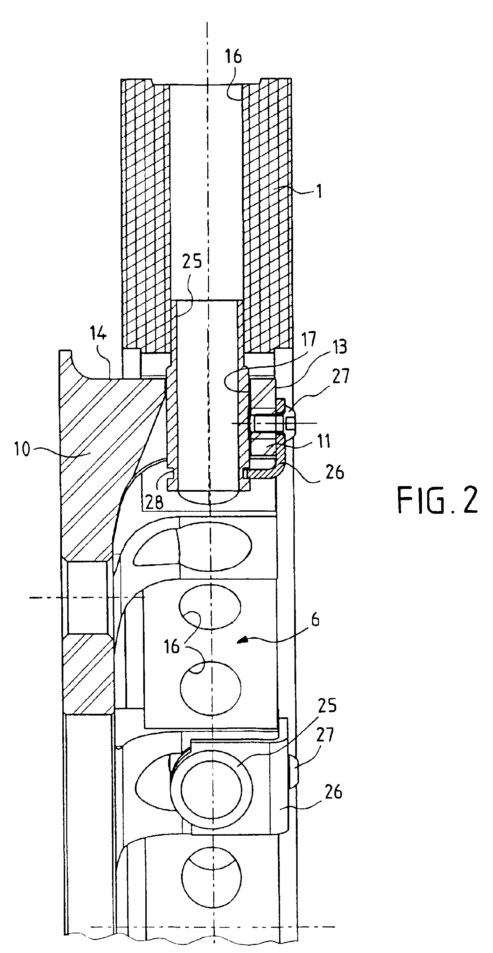

Selon un premier mode de réalisation préférentiel, et comme l'illustre la figure 2, la liaison axiale entre le moyeu 10 et le disque annulaire 1 est assurée par des pions radiaux 25, au moins au nombre de trois angulairement répartis, chaque pion étant enfiché d'une part, avec un léger jeu de 0.2 à 0.4 mm, dans un canal traversant radial 17 d'un cran 11 et d'autre part, avec un montage juste serré, dans le conduit de ventilation radial 16 du disque de freinage lui faisant face. En traversant ainsi à la fois le moyeu et le disque, il est réalisée une fixation axiale avec un jeu parfaitement contrôlé. Une plaquette d'arrêt 26 fixée (par exemple par une vis 27) dans la face distale 13 du cran coopère avec une gorge 28 du pion pour le maintenir en position et éviter son déplacement radial voire son éjection sous l'effet des forces d'inertie ou plus simplement sous l'effet des vibrations. Bien entendu, l'invention n'est pas limitée à cette solution particulière et la plaquette d'arrêt 26 pourra être remplacée par tout autre moyen de blocage analogue, par exemple une vis freinée par un fil d'acier. Le pion 25 est percé de part en part pour ne pas entraver la ventilation interne du disque et conserver ainsi l'architecture spécifique de ce type de disque. On notera que cette pièce est facile d'obtention, par usinage ou tout autre moyen.

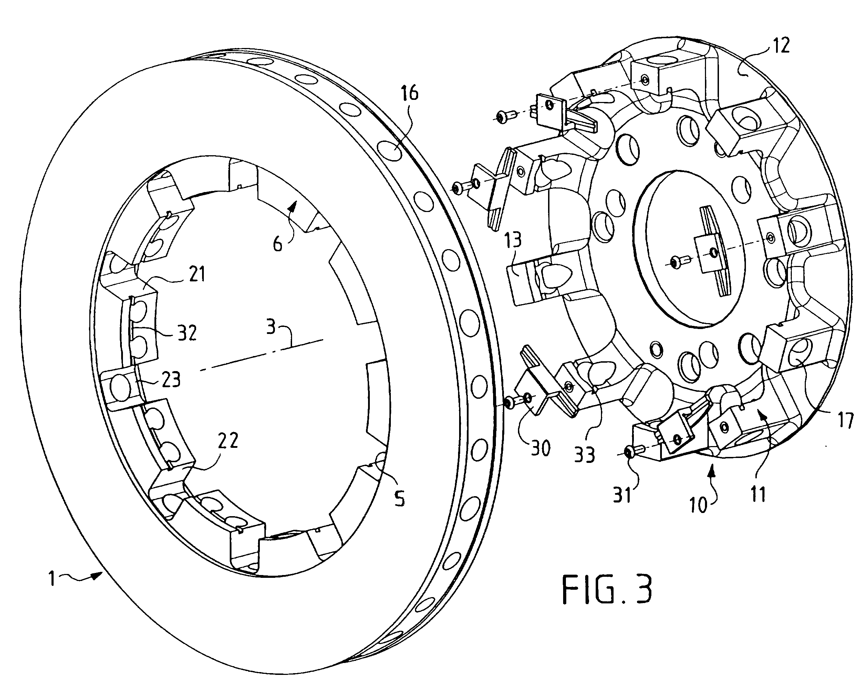

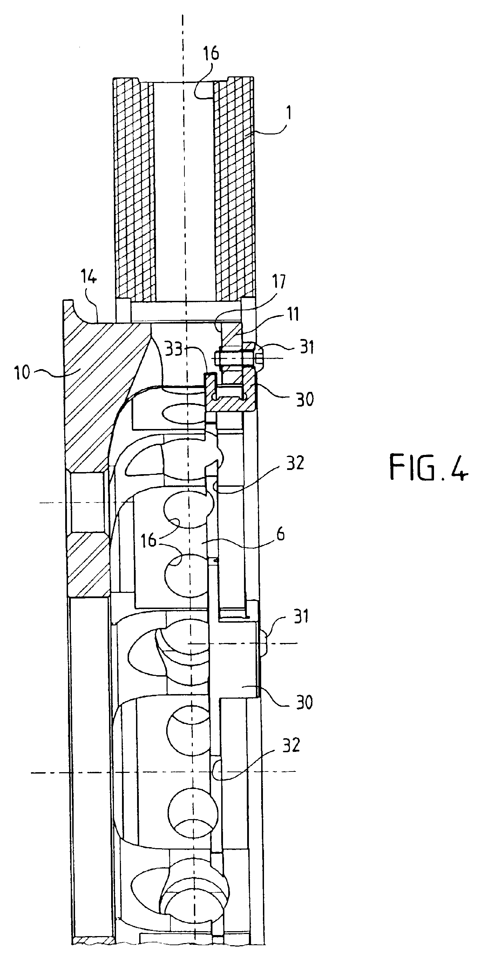

Selon un second mode de réalisation, et comme l'illustrent les figures 3 et 4, la liaison axiale entre le moyeu 10 et le disque annulaire de freinage 1 peut aussi être assurée par au moins trois pattes 30 fixées chacune (par exemple par vis 31 ) dans la face distale 13 d'un cran du moyeu et dont une partie libre coopère avec une fente 32, perpendiculaire à l'axe 3, pratiquée dans chacun des deux reliefs 6 adjacents du bord périphérique intérieur 5 du disque, de façon à assurer un maintien axial du disque nécessaire pour éviter un frottement résiduel du disque sur les plaquettes et pour éviter les problèmes de repoussage des plaquettes dû au mouvement de ce disque à haute vitesse. Le cran 11 comporte une gorge 33, également perpendiculaire à l'axe 3, disposée dans le prolongement de la fente 32 et destinée à recevoir la partie libre de la patte 30. Cette gorge est légèrement plus large que la fente afin d'assurer un léger jeu de 0.2 à 0.4 mm.

Les matériaux utilisés dans le dispositif de l'invention (pour la réalisation des pions, pattes et plaquettes d'arrêt) seront préférentiellement des alliages d'aluminium traités en surface ou des alliages de titane (de type Ti Al 6 Va).

Ainsi, selon l'invention, on a réalisé un dispositif de fixation axiale permettant notamment le montage, démontage rapide et facile du disque et la réduction du nombre de pièces (réduction du coût). En outre, sa fabrication en est facilitée de même que son utilisation.

## Revendications

1. Dispositif de fixation axiale d'un disque annulaire de freinage (1) sur un moyeu de roue (10) d'un véhicule automobile, ce disque annulaire de freinage ayant un même axe de rotation (3) que le moyeu et comportant des conduits radiaux de ventilation (16) régulièrement répartis à sa périphérie, caractérisé en ce que ledit moyeu comporte des reliefs axiaux de guidage ou crans (11) destinés à coopérer avec des cannelures (23) d'un bord périphérique intérieur (5) du disque pour centrer le disque, le bloquer angulairement et le guider axialement par rapport au moyeu, chaque cran du moyeu comportant un canal traversant radial (17) destiné à coopérer avec un conduit de ventilation (16) correspondant du disque et en ce que le maintien axial du disque dans le moyeu est effectué avec jeu par des moyens ( 15, 20) de maintien axial disposés entre le disque et le moyeu.

2. Dispositif de fixation axiale selon la revendication 1, caractérisé en ce que lesdits moyens de maintien axial comportent une pluralité de pions radiaux (25), chaque pion étant enfiché d'une part dans un canal traversant radial (17) d'un cran (11) du moyeu et d'autre part dans le conduit de ventilation radial ( 16) lui faisant face du disque de freinage (1).

3. Dispositif de fixation axiale selon la revendication 2, caractérisé en ce que le canal traversant radial (17) du cran présente un diamètre légèrement plus important que celui du pion (25) afin d'assurer un léger jeu axial de 0.2 à 0.4 mm.

4. Dispositif de fixation axiale selon la revendication 2, caractérisé en ce qu'il comporte au moins un pion percé radialement de part en part pour ne pas entraver la ventilation interne du disque.

5. Dispositif de fixation axiale selon la revendication 2, caractérisé en ce qu'il comporte en outre un moyen de blocage pour maintenir le pion (25) en position lors de la rotation de la roue et ainsi éviter son déplacement radial.

6. Dispositif de fixation axiale selon la revendication 5, caractérisé en ce que ledit moyen de blocage comporte une plaquette d'arrêt (26) fixée sur une face distale (13) du cran et destinée à coopérer avec une gorge (28) du pion (25).

7. Dispositif de fixation axiale selon la revendication 1, caractérisé en ce que ledit moyen de maintien axial comporte au moins une patte (30) fixée sur une face distale (13) d'un cran du moyeu et destinée à coopérer avec une fente (32), perpendiculaire à l'axe commun (3), et pratiquée dans chacun des deux reliefs (6) adjacents du bord périphérique intérieur (5) du disque.

8. Dispositif de fixation axiale selon la revendication 7, caractérisé en ce que ledit cran du moyeu comporte en outre une gorge (33), perpendiculaire à l'axe commun (3), et pratiquée dans le prolongement de la fente (32) pour recevoir la patte (30).

9. Dispositif de fixation axiale selon la revendication 8, caractérisé en ce que la gorge (33) présente une largeur légèrement plus importante que celle de la fente (32) afin d'assurer un léger jeu axial de 0.2 à 0.4 mm.

10. Dispositif de fixation axiale selon l'une quelconque des revendications 1 à 9, caractérisé en ce que le disque de freinage (1) est réalisé en un matériau composite en carbone/carbone.
